Europäisches Patentamt

(19) European Patent Office

Office européen des brevets

(11) Publication number: **0 139 540**
**A2**

(12) **EUROPEAN PATENT APPLICATION**

(21) Application number: **84307308.1**

(22) Date of filing: **24.10.84**

(51) Int. Cl.⁴: **E 05 B 49/04**

(30) Priority: **27.10.83 ZA 838025**
**21.02.84 ZA 841243**

(43) Date of publication of application:
**02.05.85 Bulletin 85/18**

(84) Designated Contracting States:
**AT BE CH DE FR GB IT LI LU NL SE**

(71) Applicant: **Papsi Systems (Proprietary) Limited**
**Triomf House Empire Road**
**Milpark Transvaal Province(ZA)**

(72) Inventor: **Papsdorf, Kurt Rolf**
**Farm 152 Broederstroom**
**Transvaal Province(ZA)**

(74) Representative: **Dixon, Donald Cossar et al,**
**Gee & Co. Chancery House Chancery Lane**
**London WC2A 1QU(GB)**

(54) **Electrical contact units and components thereof.**

㊼ A contact unit having generally a plurality of contact assemblies (25) carried on a mounting board (15) therefor is provided. The contact assemblies (25) are each adjustably positionable along the length of one of a plurality of slots (16) provided in the mounting board (15). The slots (16) generally form a series of parallel slots and the contact assemblies (25) have bodies (28) which can be fixed to the mounting board in any required position preferably by gluing, adhesive, fusion or welding. The contacts of the assemblies may thus be adjusted in one direction on the mounting board by movement along a slot (16) and in the opposite direction by selection of a slot (16) for co-operation with specific zones of conductive areas (2) on a juxtaposed member (1).

FIG.1

-1-

ELECTRICAL CONTACT UNITS AND COMPONENTS THEREOF

THIS INVENTION relates to electrical contact units in which at lest one electrical contact is to be carried by a base or mounting board and is to be selectively or adjustably positionable on such base or mounting board in at least two different directions. The invention also relates to components of such contact units.

More particularly the invention relates to electrical contact units of this general type in which at least two electrical contacts are carried by the base or mounting board and each is selectively or adjustably positionable on the base or mounting board independently of the other.

In many applications it is desirable to have a number of contacts adjustably or selectively

/...

positionable on a base or mounting board for co-operation with electrically conductive zones on a co-operating member, such as an activator, having electrically conductive paths thereon in order to close circuits between the contacts when the activator is operatively located relative to the contact unit.

In one such application the contact unit is employed as part of a sensor co-operating with an activator in the form of a printed circuit type of board having a complex array of conductive paths thereon which may conform to the ridges or valleys of a part of a person's finger print or the like. In such a form the contact unit and activator co-operate to form a high security "key" arrangement. Further details of such an application may be obtained from the specification accompanying our co-pending South African Patent Application No. 84/3444 filed on May 8, 1984 and entitled "ELECTRONIC ACTIVATOR AND CO-OPERANT SENSOR ASSEMBLY"; corresponding European Patent Application No. 84303019.8 .

In such applications it is desirable that contacts can be selectively and adjustable located on a base or mounting board to ensure that they can be properly located to contact the required conductive zone on an activator and it is the object of this invention to provide contact units and component parts thereof wherein such location is simple and the contacts may be permanently fixed relative to the base or mounting board if required.

In accordance with this invention there is provided a contact unit comprising a base in the form of a mounting board, at least two slots in the mounting board, and a contact assembly adjustably positionable in either of said slots.

Further features of the invention provide for there to be two or more contact assemblies each co-operating with a slot in the mounting board; for the slots to be parallel to each other and for there to be a series of such parallel laterally spaced slots; for the mounting board to be made of electrically insulating material; and for each contact assembly to embody a part which can be fixed by gluing, adhesive, fusion or welding of any type (including solvent welding) to the mounting board to fix same relative thereto at least semi-permanently.

/...

-4-

Still further the invention provides for each contact assembly to comprise a spring biased contact projecting through the associated slot and carried by a body which attaches to the mounting board in the slot region; for the body to be U-shaped with one limb of the U contacting the mounting board surface with the contact being axially movable relative to, and passing through, the arms of the body; and for said one limb to embody a foot having outwardly directed catch formations engaging the undersurface of the mounting board with the foot passing through a slot.

The bodies of the contact assemblies are made of electrically insulating material and conveniently both such bodies and the mounting board are made of compatible thermoplastics material so that they can easily be fused together to lock a body relative to the mounting board in at least semi-permanent manner. Welding may be carried out in any way such as, for example, direct heating (with a soldering iron for example) or by ultrasonic "heating".

/...

Contact assemblies and mounting boards particularly adapted to form part of a unit as above defined are also intended to fall within the scope of this invention.

An embodiment of the present invention will now be described, by way of example, with reference to the accompanying drawings in which:-

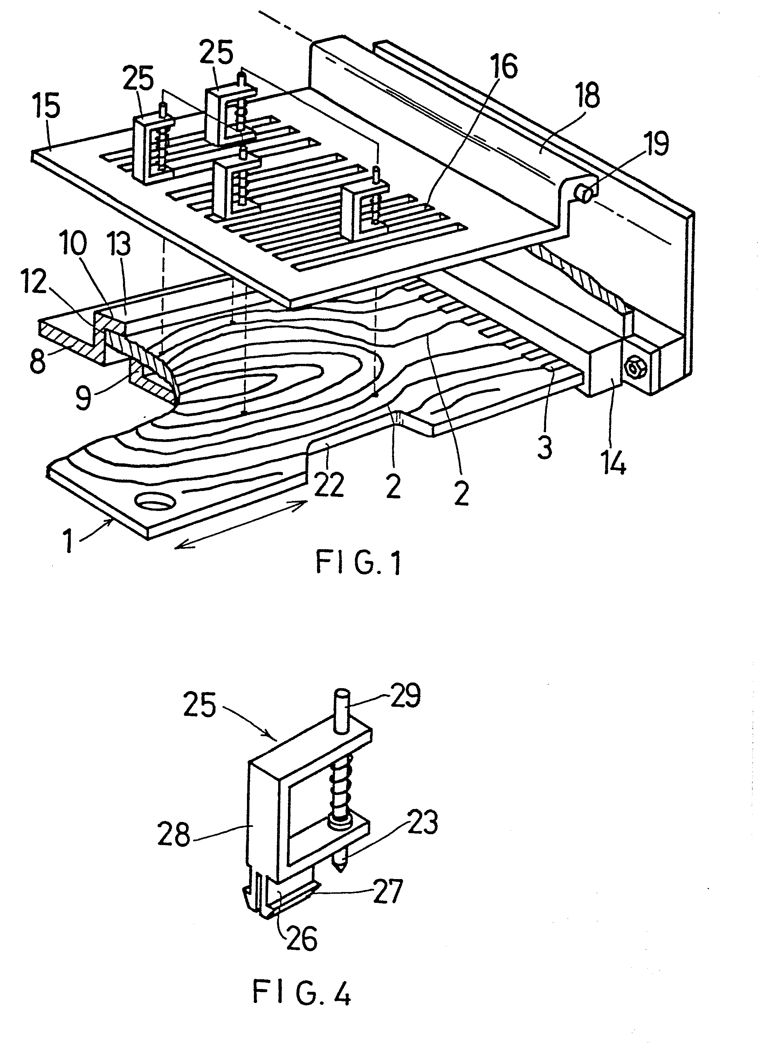

FIG. 1 is an exploded isometric view of a contact unit and co-operant activator,

FIG. 2 is an exploded view of a sensor embodying the contact unit,

FIG. 3 is a sectional view thereof, and,

FIG. 4 is an isometric view of a single contact assembly.

In this embodiment of the invention the contact unit is used in a sensor arrangement for co-operation in a security access system with an

/...

activator. The activator is in the form of a rectangular printed circuit board 1 having a complex array of conductive paths 2 thereon and a row of terminals 3 at its one end 4 which forms the leading edge in use. At least some of these terminals are connected to different conductive paths as will become apparent from the following. Each conductive path associated with a terminal 3 is substantially electrically isolated from that associated with the other terminals.

A sensor unit 5 is adapted to releasably receive the activator, leading edge first, through an entrance slot 6 in the front face 7 of the sensor unit.

The front face 7 is carried by a floor 8, conveniently integral therewith, and the floor 8 is shaped to provide locating guides 9 and 10 for the activator. The guides 9 extend transversely to the entrance slot and serve to support the undersurface of the activator in use. These guides are simply in the form of ridges made integral with the floor.

/...

The other guides 10 are located, one along each longitudinal edge 11 of the activator, so as to guide, by means of a portion 12 at right angles to the floor, said longitudinal edges. An inwardly directed lip 13 serves to locate the operatively upper surface of the activator unit and the surface which, in fact, carries the electrically conductive paths 2.

At the inner end of the guides 9 and 10 there is located a terminal block 14 adapted for co-operation with the row of terminals 3 located along the leading edge 4 of the activator. The terminals of the terminal block may form the contacts for co-operation with these terminals 3 on the activator.

Thus, when an activator is inserted into the slot 6, it is pushed until such time as the leading edge plugs into the terminal block 14 in known manner. The terminal block thus acts as a stop and the guides 9 and 10 serve to locate the activator unit in all other directions.

/...

0139540

The sensor unit further embodies a contact unit comprising a mounting board 15 having a series of slots 16 therethrough and extending parallel to the guides 9 and 10. The slots 16 are located directly over the face of the activator 1 when the latter is in an installed position within the sensor unit.

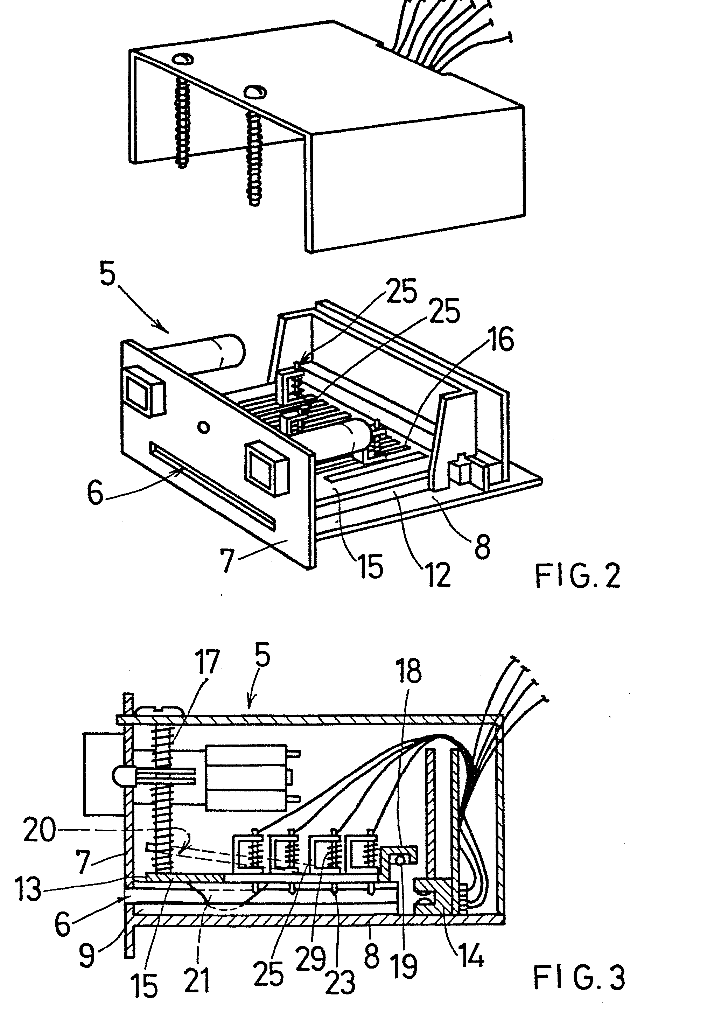

The mounting board is spring biased, by means of springs 17 bearing on the end thereof nearer the slot 6, so that the mounting board 15 lies flush on top of the inwardly directed lips 13 of the guides 10. The rear edge 18 of the mounting board is pivotally mounted by way of journals 19 to be rotatable between a position in which the mounting board is raised, (as indicated by dotted lines 20 in Fig. 3) and one in which it is supported on the inwardly directed lips as indicated above.

Projecting inwardly past the lips 13 of the guides 10, are a pair of cam members 21 (seen clearly in Fig. 3) which thus project into the path of movement of the activator. These cam members ride on the upper surface of the activator during its introduction into the sensor unit and are accommodated within recesses 22 provided in the side edges 11 of the activator unit when it is in its fully installed position.

It will be understood that the above described arrangement holds spring biased contacts 23 supported by the mounting board out of contact with the conductive paths on the activator until such time as the latter is substantially in the installed condition, when the mounting board is allowed to pivot around its journals 19 so that the contacts 23 can engage the conductive paths on the activator.

The spring biased contacts 23 are preferably embodied in specially manufactured contact assemblies 25 (illustrated clearly in Fig. 4) so that each individual contact assembly can clip into one of the series of parallel slots 16 in the mounting board by means of an integrally moulded foot 26 which has outwardly directed catch formations 27 for engaging the undersurface of the mounting board. An integral body 28, of basically U-shape lying on its side, carries the foot 26 and the contact 23 is defined by one end of an axially slidable conductive pin 29 spring biased towards the activator in the operative position. The pin 29 projects through its associated slot with the body 28 located on the side of the mounting board opposite the activator.

It will be understood that the spring biased contacts 23 can be adjusted in position, prior to their being fixed, by sliding the contact assembly up and down a selected slot in which it is located.  Thus, in order to achieve longitudinal spacing from other contacts on the terminal block 14, and by selecting the appropriate slot 16 of the series thereof, transverse spacing of the contact assemblies can be achieved.

The spring biased contacts, and the contacts associated with the terminal block 14, thus provide contacts which can be interconnected, generally in pairs thereof, through the medium of the conductive paths on the activator.

The individual contact assemblies may be fixed relative to the mounting board in any manner as indicated above and even by means of screw threaded or other fasteners, if required.

It will be understood that numerous variations may be made by those skilled in the art to the embodiment described above and the invention is not limited in its applications to a sensor as described above.

CLAIMS

1. A contact unit comprising a base in the form of a mounting board, at least two slots in the mounting board, and a contact assembly adjustably positionable in either of said slots.

2. A contact unit as claimed in claim 1 in which two or more contact assemblies are each associated with a slot in the mounting board.

3. A contact unit as claimed in either of claims 1 or 2 in which the slots are parallel to each other.

4. A contact unit as claimed in claim 3 in which a series of parallel slots are provided in the mounting board.

/...

5. A contact unit as claimed in any one of the preceding claims in which the mounting board is made of electrically insulating material.

6. A contact unit as claimed in any one of the preceding claims in which each of said contact assemblies embodies a part capable of being fixed to the mounting board by glue, adhesive, fusion, or welding of any type (including solvent welding).

7. A contact unit as claimed in claim 6 in which the contact assemblies have, subsequent to adjustment of the position thereof, been fixed relative to the mounting board by gluing, adhesive, fusion or welding (including solvent wleding).

8. A contact unit as claimed in any one of the preceding claims in which each contact assembly comprises a spring biased contact projecting through the associated slot.

9. A contact unit as claimed in any one of the preceding claims in which the contact itself

/...

**0139540**

is carried by a body which attaches to the mounting board by way of a foot portion which passes through the associated slot.

10. A contact unit as claimed in claim 9 in which the foot portion has outwardly directed catch formations co-operating with the undersurface of the mounting board adjacent the slot edges.

11. A contact assembly particularly adapted for co-operation with a mounting board to form a contact unit as claimed in any-one of the preceding claims.

12. A mounting board adapted to define, in combination with one or more contact assemblies according to claim 11, a contact unit as claimed in any of claims 1 to 10.

/...

FIG. 1

FIG. 4

0139540

FIG.2

FIG.3